# EUROPEAN PATENT SPECIFICATION

(11) **EP 3 388 273 B1**
(45) Date of publication and mention of the grant of the patent: **02.06.2021**
(21) Application number: 18166909.4
(22) Date of filing: 11.04.2018
(51) Int. Cl.: B60K 15/07, B60K 15/077, B60K 15/063

(54) **PUBLIC TRANSPORT VEHICLE COMPRISING AN IMPROVED GAS RACK MODULE**
FAHRZEUG FÜR DEN ÖFFENTLICHEN VERKEHR MIT EINEM VERBESSERTEN GASAUFNAHMEMODUL
VÉHICULE DE TRANSPORT PUBLIC COMPRENANT UN MODULE DE RÉCEPTION DE GAZ AMÉLIORÉ

(30) Priority: 11.04.2017 IT 201700040162
(43) Date of publication of application: 17.10.2018
(73) Proprietor: IVECO FRANCE S.A.S., 69200 Vénissieux (FR)
(72) Inventor: KEJZLAR, Petr, CZ-56601 Vysoke Myto (CZ)
(74) Representative: Bongiovanni, Simone

(56) References cited:
- EP-A2- 1 145 892
- CN-B- 103 318 018
- DE-A1- 3 743 804
- DE-A1- 10 306 872
- US-A1- 2011 140 483
- US-A1- 2012 280 481

## Description

The present invention concerns a public transport vehicle, in particular a public transport vehicle comprising a rack module for Compressed Natural Gas (CNG) bottles for a bus.

Gas vehicles, i.e. vehicles which use exclusively a gas for motor propulsion, or multi-fuel vehicles, i.e. vehicles which use a gas together with gasoline or diesel for motor propulsion, need to store the gas to use during the operation of the vehicle.

Usually the gas is compressed and contained in bottles which are organized in a rack module carried by the vehicle. In public transport vehicles the rack module is normally placed above the roof of the vehicle.

The aforementioned rack module usually comprises a substantially box-shaped housing, fixed totally above the roof of the vehicle, defining an inner volume in which at least one gas bottle may be recovered and a cover, normally made in one piece, configured to engage prismatically the housing to delimited the inner volume.

However, the aforementioned configuration has many drawbacks.

First, the height of the rack module is bigger than any other module housed on the roof of the vehicle, increasing therefore the maximum height of the vehicle.

Moreover, since the bottles are really heavy when full of compressed gas, the center of gravity of the bus is displaced so that the stability of the bus get worse.

Again, the aerodynamic of the vehicle is decreased and consequently the fuel consumption is consequently increased.

Finally, since the cover is made of a single piece which is prismatically coupled to the housing, it is necessary to totally remove the cover to access to the housing in which the bottles are stored.

Examples of vehicles provided of rack modules as known in the art and suffering the above described problems are disclosed in DE10306872 A1, US20110140483 A1 or DE3743804 A1.

Therefore, the need is felt to have a rack module for a public transport vehicle improving the vehicle performances, simply for manufacturing and allowing an easy accessibility.

An aim of the present invention is to satisfy the above mentioned need.

The aforementioned aim is reached by a rack module for a public transport vehicle as claimed in claim 1 .

For a better understanding of the present invention, a preferred embodiment is described in the following, by way of a non-limiting example, with reference to the attached drawings wherein:
- Figure 1 is a lateral plan view of a vehicle comprising a rack module for compressed gas bottles according to the present invention;
- Figure 2 is an enlarged lateral section view of an opened configuration of a rack module according to the present invention;

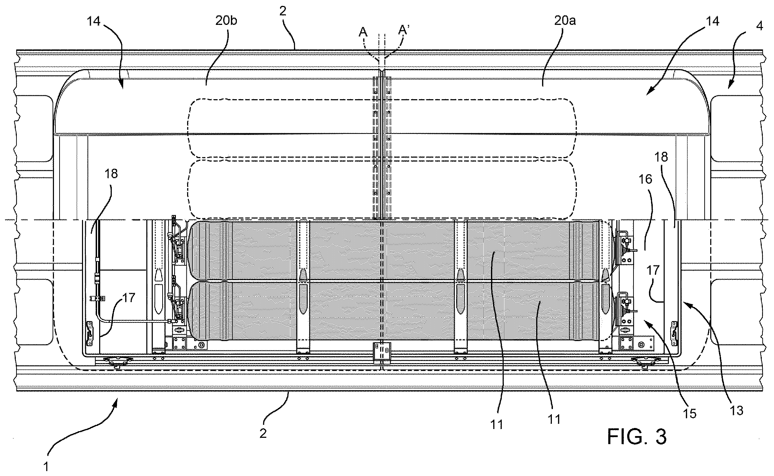

- Figure 3 is a top view of the rack module of figure 2; and

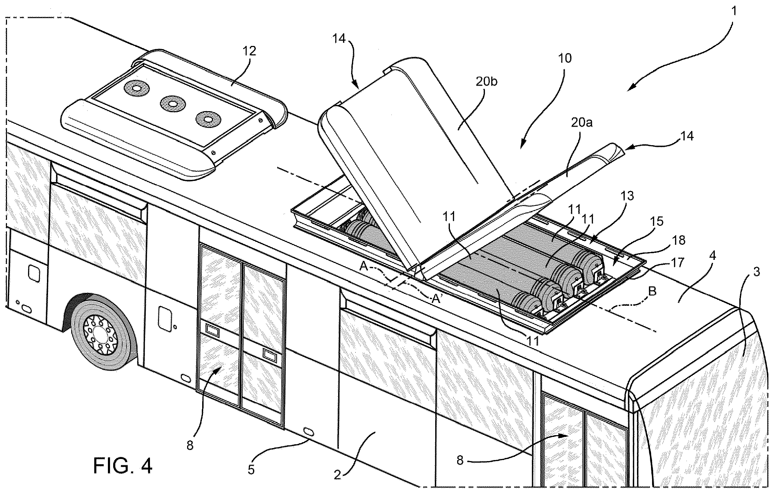

- Figure 4 is a perspective view the rack module of figure 2.

In the foregoing, the term "gas vehicle" is nonlimitative and may be applied to exclusively gas vehicles, i.e. vehicles which use exclusively a gas for motor propulsion, or to multi-fuel vehicles, i.e. vehicles which use a gas together with gasoline or diesel for motor propulsion.

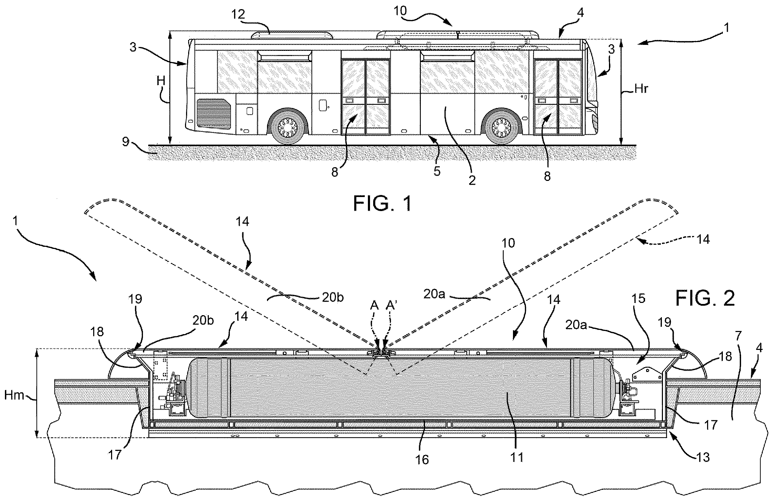

Figure 1 shows a gas vehicle 1 for public transport, for example a bus, comprising a pair of lateral walls 2, a front and a rear walls 3, a roof 4 and a floor 5 defining a interior volume 7 into which passengers may access by at least one door 8, in this case a rear and a front door 8.

The vehicle 1 comprises moreover a rack module 10 configured to house at least one bottle 11 of compressed gas configured to be used by the vehicle 1 during its operation.

The rack module 10 is placed on the roof 4 and it is at least partially sunk into the roof 4 so that the height H of the rack module 10 with respect to the ground 9 is lower than the sum of the height hr of the roof 4 with respect to the ground and the height hm of the rack module 10.

The height of the rack module 10 is function of the dimension of the bottle 11 placed inside it, normally it varies from 485 mm to 505 mm.

Preferably, the height H of the rack module 10 is lower than the height of at least one other module 12 placed on the roof 4, e.g. an AC module of the vehicle 1. For example, in case of LE vehicle, the height H of the rack module with respect to the ground 9 is therefore lower or equal than 3205mm)

The rack module 10 comprises a housing 13 being substantially box-shaped and a cover 14 configured to be coupled to the housing 13 in order to define with the housing 13 an inner volume 15 configured to house at least one bottle 11 for containing compressed gas.

The housing 13 comprises a lower wall 16 and a lateral wall 17 extending axially from at least part of the perimeter of the lower wall 16. Preferably, the lateral wall 17 extends from all the perimeter of the lower wall 16.

The lower wall 16 is advantageously positioned under the roof 4, inside the interior volume 7 of the vehicle. As consequence, at least a portion of the lateral wall 17 extends below the level of the roof 4 and the remaining portion extend above the level of said roof 4.

The position of the lower wall 16 may advantageously varied in function of the dimension of the bottles that are housed in the inner volume 15. Preferably, the lower wall 16 is positioned inside the interior volume 7 so as at least half of the diameter of a bottle 11 is placed below the roof 4. The lower wall 16 may be moreover equipped with openings (not illustrated) faced to the inner volume 7 configured to evacuate possible condensed air humidity formed within the inner volume 15. In fact, during use of gas contained in bottle 11, these latter cool and air may condense and generate liquid which collects in volume 15.

The housing 12 is realized integrated with said roof 4, i.e. being substantially a receptacle in said roof 4.

An inclined wall 18 extends from an upper extremity of the lateral wall 17. More preferably the inclined wall 18 is configured to open getting away from the extremity of the lateral wall 17.

The inclined wall 18 is configured to cooperate with the cover 14 in order to isolate the inner volume 15 (e.g. to prevent the penetration of water/dust into the inner volume 15), when the cover 14 is closed on the housing 13. To the abovementioned scope, the inclined wall 18 may comprise a gasket 19 at its extremity.

The cover 14 advantageously comprises at least one leaf hinged with respect to the housing 13 and configured to have a first configuration in which it is closed and the inner volume 15 is isolated from the environment and a second configuration in which it is open allowing the access to the inner volume 15.

The opening of the at least one leaf may be realized by pivoting about the aforementioned hinge thanks automatic handling means (not shown), such as an hydraulic or pneumatic cylinder and/or a mechanical gearing.

Preferably the cover 14 comprises two leafs 20a, 20b hinged about respective axis A, A' which are transversal, i.e. perpendicular, with respect to a longitudinal axis B of the housing 13.

More preferably, the axis A, A' are placed substantially along the transversal centerline of the inclined wall 18.

Advantageously the leafs 20a, 20b are realized to be of the same dimensions. The hinges about axis A, A' are configured to allow the leafs 20a, 20b to open till they are each perpendicular with respect to the housing 13 in order to allow a full accessibility to the inner volume 15.

The operation of the vehicle comprising a rack module according to the present invention is the following.

During the use of the vehicle 1, the rack module 10 is in a closed configuration, in which the cover 14 isolates the bottles 11 of the environment.

When it is needed to access to the inner volume 15, e.g. during maintenance or substitution of the bottles 11, the user of the vehicle 1 can activate the handling means that will open the leafs 20a, 20b allowing the user to inspect the bottles or to service them.

In view of the foregoing, the advantages of a device 1 according to the invention are apparent.

The rack module 10, which is partially sunk in the roof 4, decreases the maximum height of the vehicle 1 with respect to existing rack module which are positioned totally above the vehicle.

The decreased height allows a reduction of the aerodynamic resistance. Moreover, the partially sunk position decreases the vehicle center of gravity improving the vehicle stability.

Again, the fact that the housing 13 is integrating in the roof as a receptacle extending in the interior volume 7, decreases the air volume which has to be conditioned and therefore the fuel consumption.

Moreover, since the bottles are not totally exposed to the external space but partially placed within the vehicle, the risk of damages during an accident is prevented.

Finally, the partially sunk position help to fulfill the vehicle roll-over test of R66.02 regulation.

Thanks to the openings in lower wall 16 of housing 13, condensed air liquid may be evacuated from volume 15 avoiding any problem due to such liquid, e.g. bottle corrosion.

It is clear that modifications can be made to the described stopping device 1 which do not extend beyond the scope of protection defined by the claims.

For example, the shape of the housing 13 may be varied, in particular the position of the lower wall 16 under the roof 4 or the shape of the lateral wall 17 and the inclined wall 18.

Moreover, the dimensions of the leafs 20a, 20b may be varied and consequently the position of the hinges about axis A, A' with respect to the housing 13, more precisely with respect to the inclined wall 18.

Finally, handling means may be not present and the leafs 20a, 20b could be opened by and fixed in their opened position.

Obviously, other elements, e.g. electric packs, may be installed together with or in replacement of bottles 11 within the inner volume 7 of the rack module 10.

## Claims

1. Vehicle (1) for public transport comprising a rack module (10) suitable for housing at least one bottle (11) suitable for containing a pressurized gas utilizable during the operation of said vehicle (1), said vehicle (1) comprising a roof (4) on which said rack module (10) is mounted,
said rack module (10) being at least partially sunk into said roof (4) and being realized integrated in said roof (4) and comprising a housing (13) substantially shaped as a box and defining a volume (15) for housing at least one of said bottles (11) which can be positioned either longitudinally or transversally with respect to said housing, said housing (13) comprising a lower wall (16) and a lateral wall (17) extending axially from at least part of the perimeter of said lower wall (16), said rack module (10) further comprising a cover (14) configured to close said volume (15) defined by said housing (13), wherein said rack module (10) is sunk so that the height (H) of said rack module (10) with respect to the ground (9) is lower than the sum of the height (hr) of the roof (4) with respect to the ground (9) and the height (hm) of said rack module (10) and wherein the height (H) of said rack module (10) with respect to the ground (9) is at maximum equal to the height of another module (12) placed on said roof (4), said housing (13) comprising an inclined wall (18) extending from an upper extremity of said lateral wall (17) and being configured to cooperate with said cover (14) so as to isolate said volume (15) from environment when said cover (14) is closed.

2. Vehicle according to claim 1, **characterized in that** said lower wall (16) positioned under said roof (4) of said vehicle (1) is equipped with a plurality of openings configured to evacuate condensed air humidity in said volume (15).

3. Vehicle according to claim 1 or 2, **characterized in that** said cover (14) comprises at least one leaf (20a; 20b) which is hinged with respect to said housing (13).

4. Vehicle according to claim 3, **characterized in that** said cover (14) comprises two leafs (20a, 20b) which are hinged on said housing (13).

5. Vehicle according to claim 4, **characterized in that** said two leafs (20a, 20b) are equal and said hinge is realized transversally with respect to said housing (13).

6. Vehicle according to any of claims 3 to 5, **characterized in that** said rack module (10) comprises opening means configured to handle said at least one leaf (20a; 20b) in order to allow the accessibility to the volume (15) defined by said housing (13) .

7. Vehicle according to claim 6, **characterized in that** said at least one leaf (20a; 20b) can be opened till to be positioned vertically with respect to said housing (13).

## Patentansprüche

1. Fahrzeug (1) für den öffentlichen Verkehr, umfassend ein Aufnahmemodul (10) zur Aufnahme zumindest einer Flasche (11), welche geeignet ist, ein Druckgas aufzunehmen, welches während des Betriebs des Fahrzeugs (1) verwendbar ist, welches Fahrzeug (1) ein Dach (4) umfasst, auf welchem das Aufnahmemodul (10) montiert ist,
wobei das Aufnahmemodul (10) zumindest teilweise in das Dach (4) versenkt ist und in das Dach (4) integriert ist und ein Gehäuse (13) umfasst, welches im wesentlichen kastenförmig ist und ein Volumen (15) zur Aufnahme zumindest einer der Flaschen (11) begrenzt, welche entweder längs oder quer zum Gehäuse positioniert werden können, welches Gehäuse (13) ferner einen Boden (16) umfasst, sowie eine Seitenwand (17), die sich axial von zumindest einem Teil des Umfangs des Bodens (16) erstreckt, wobei das Aufnahmemodul (10) ferner eine Abdeckung (14) umfasst, ausgebildet zum Schließen des Volumens (15), welches durch das Gehäuse (13) begrenzt wird, wobei das Aufnahmemodul (16) derart versenkt ist, dass die Höhe (H) des Aufnahmemoduls (10) über dem Boden (9) kleiner ist als die Summe der Höhe (hr) des Dachs (4) über dem Boden (9) und der Höhe (hm) des Aufnahmemoduls (10), wobei die Höhe (H) des Aufnahmemoduls (10) über dem Boden (9) maximal gleich der Höhe eines weiteren Moduls (12) ist, das auf dem Dach (4) angeordnet ist,
wobei das Gehäuse (13) eine geneigte Wand (18) aufweist, die sich von einem oberen Ende der Seitenwand (17) erstreckt und derart ausgebildet ist, dass sie mit der Abdeckung (14) derart zusammenwirkt, dass sie das Volumen (15) von der Umgebung isoliert, wenn die Abdeckung (14) geschlossen ist.

2. Fahrzeug gemäß Anspruch 1, **dadurch gekennzeichnet, dass** der Boden (16) unterhalb des Dachs (4) des Gehäuses (1) mit einer Mehrzahl von Öffnungen zur Abführung kondensierter Luftfeuchtigkeit in dem Volumen (15) ausgestattet ist.

3. Fahrzeug gemäß Anspruch 1 oder 2, **dadurch gekennzeichnet, dass** die Abdeckung (14) zumindest einen Flügel (20a;20b) umfasst, der bezüglich des Gehäuses (13) schwenkbar ist.

4. Fahrzeug gemäß Anspruch 3, **dadurch gekennzeichnet, dass** die Abdeckung (14) zwei Flügel (20a;20b) umfasst, welche mit dem Gehäuse (13) schwenkbar verbunden sind.

5. Fahrzeug gemäß Anspruch 4, **dadurch gekennzeichnet, dass** die zwei Flügel (20a;20b) gleich sind und das Scharnier quer zum Gehäuse (13) angeordnet ist.

6. Fahrzeug gemäß einem der Ansprüche 3 bis 5, **dadurch gekennzeichnet, dass** das Aufnahmemodul (10) Öffnungsmittel umfasst, ausgebildet zur Handhabung des zumindest einen Flügels (20a;20b), um das Volumen (15) zugänglich zu machen, welches durch das Gehäuse (13) begrenzt wird.

7. Fahrzeug gemäß Anspruch 6, **dadurch gekennzeichnet, dass** der zumindest eine Flügel (20a;20b) geöffnet werden kann, bis er vertikal zum Gehäuse (13) steht.

## Revendications

1. Véhicule (1) pour transport public comprenant un module de râtelier (10) approprié pour loger au moins une bouteille (11) appropriée pour contenir un gaz comprimé utilisable durant le fonctionnement dudit véhicule (1), ledit véhicule (1) comprenant un toit (4) sur lequel est monté ledit module de râtelier (10),
ledit module de râtelier (10) étant au moins partiellement enfoncé dans ledit toit (4) et étant réalisé intégré dans ledit toit (4) et comprenant un logement (13) ayant sensiblement la forme d'une boîte et définissant un volume (15) pour loger au moins une desdites bouteilles (11) qui peut être positionnée soit longitudinalement soit transversalement par rapport audit logement, ledit logement (13) comprenant une paroi inférieure (16) et une paroi latérale (17) s'étendant axialement depuis au moins une partie du périmètre de ladite paroi inférieure (16), ledit module de râtelier (10) comprenant en outre un couvercle (14) configuré pour fermer ledit volume (15) défini par ledit logement (13),
dans lequel ledit module de râtelier (10) est enfoncé de telle sorte que la hauteur (H) dudit module de râtelier (10) par rapport au sol (9) est inférieure à la somme de la hauteur (hr) du toit (4) par rapport au sol (9) et de la hauteur (hm) dudit module de râtelier (10) et dans lequel la hauteur (H) dudit module de râtelier (10) par rapport au sol (9) est au maximum égale à la hauteur d'un autre module (12) placé sur ledit toit (4),
ledit logement (13) comprenant une paroi inclinée (18) s'étendant depuis une extrémité supérieure de ladite paroi latérale (17) et étant configurée pour coopérer avec ledit couvercle (14) de manière à isoler ledit volume (15) de l'environnement lorsque ledit couvercle (14) est fermé.

2. Véhicule selon la revendication 1, **caractérisé en ce que** ladite paroi inférieure (16) positionnée sous ledit toit (4) dudit véhicule (1) est équipée d'une pluralité d'ouvertures configurées pour évacuer l'humidité de l'air condensé dans ledit volume (15).

3. Véhicule selon la revendication 1 ou 2, **caractérisé en ce que** ledit couvercle (14) comprend au moins un battant (20a ; 20b) qui s'articule par rapport audit logement (13).

4. Véhicule selon la revendication 3, **caractérisé en ce que** ledit couvercle (14) comprend deux battants (20a, 20b) qui s'articulent sur ledit logement (13).

5. Véhicule selon la revendication 4, **caractérisé en ce que** lesdits deux battants (20a, 20b) sont égaux et ladite articulation est réalisée transversalement par rapport audit logement (13).

6. Véhicule selon l'une quelconque des revendications 3 à 5, **caractérisé en ce que** ledit module de râtelier (10) comprend un moyen d'ouverture configuré pour manipuler ledit au moins un battant (20a ; 20b) afin de permettre l'accessibilité au volume (15) défini par ledit logement (13).

7. Véhicule selon la revendication 6, **caractérisé en ce que** ledit au moins un battant (20a ; 20b) peut être ouvert jusqu'à être positionné verticalement par rapport audit logement (13).
